# EUROPÄISCHE PATENTSCHRIFT

(11) **EP 1 348 112 B1**
(45) Veröffentlichungstag und Bekanntmachung des Hinweises auf die Patenterteilung: **05.10.2005**
(21) Anmeldenummer: 01984798.7
(22) Anmeldetag: 01.12.2001
(51) Int. Cl.: G01L 19/06

(54) **DRUCKMESSGERÄT MIT DRUCKMITTLER MIT EXZENTRISCHEM KANAL SOWIE NUTEN**
PRESSURE MEASURING APPLIANCE COMPRISING A PRESSURE TRANSMISSION DEVICE HAVING AN ECCENTRIC CHANNEL AND GROOVES
APPAREIL DE MESURE DE PRESSION COMPRENANT UN SYSTEME DE TRANSMISSION DE PRESSION A CANAL EXCENTRE ET ENCOCHES

(30) Priorität: 27.12.2000 DE 10064871
(43) Veröffentlichungstag der Anmeldung: 01.10.2003
(73) Patentinhaber: Endress + Hauser GmbH + Co. KG, 79689 Maulburg (DE)
(72) Erfinder: BURCZYK, Dietfried, 14513 Teltow (DE); DANNHAUER, Wolfgang, 14513 Teltow (DE)
(74) Vertreter: Andres, Angelika Maria
(86) Internationale Anmeldenummer: PCT/EP2001/014054
(87) Internationale Veröffentlichungsnummer: WO 2002/052241

(56) Entgegenhaltungen:
- WO-A-93/17313
- DE-A- 1 919 354
- DE-A- 2 819 303
- JP-A- 57 133 330
- US-A- 5 062 302
- US-A- 5 349 491

## Beschreibung

Die Erfindung betrifft ein Druckmeßgerät zur Messung wenigstens eines Drucks eines Prozeßmediums. Insbesondere beschäftigt sich die Erfindung mit einem Druckmeßgerät, dessen Druckmeßzelle nicht direkt dem Prozeßmedium ausgesetzt ist, sondern wo der Prozeßdruck mittels einer Druckmittler-Vorrichtung auf die Druckmeßzelle übertragen wird.

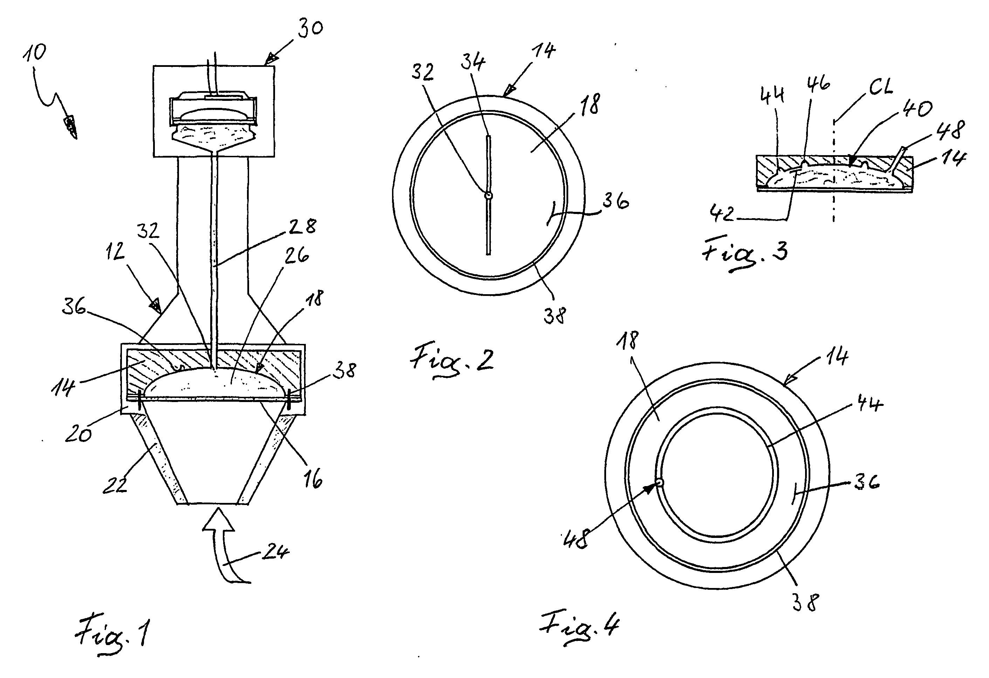

Wie in der beigefügten Zeichnung in Fig. 1 schematisch dargestellt, weisen herkömmliche Druckmeßgeräte 10 dieser Art wenigstens eine Druckmittler-Vorrichtung 12 auf mit einem Druckmittler-Grundkörper 14 und einer daran befestigten Trennmembran 16, an der das Prozeßmedium ansteht. Die Trennmembran 16 wiederum ist über einem im Druckmittler-Grundkörper 14 vorgesehenen Membranbett 18 aufgespannt, wo sie sich im Überlastfall anlegt. Zur Vereinfachung ist die eigentliche Anbindung des Druckmeßgeräts 10 an das Prozeßmedium hier nicht dargestellt, sondern wird hier durch ein mit "20" bezeichnetes Druckmittler-Gehäuse mit einem Schraubzapfen 22 beispielhaft veranschaulicht. Ein Eintritt des Prozeßmediums in den Schraubzapfen 22 wird durch einen mit "24" bezeichneten Pfeil symbolisiert.

Der an der Trennmembran 16 anstehende Prozeßdruck des Prozeßmediums bewirkt deren Auslenkung, wobei der Prozeßdruck über eine Druckmittler-Flüssigkeit 26, die die Druckmittler-Vorrichtung 12, insbesondere einen von Trennmembran 16 und Membranbett 18 gebildeten Zwischenraum, und wenigstens eine Zuleitung 28 füllt, zur Druckmeßzelle 30 übertragen wird. Die Zuleitung 28 ist dazu auf ihrer einen Seite mit der Druckmeßzelle 30 verbunden und auf ihrer anderen Seite mündet die Zuleitung 28 durch eine Öffnung, meistens eine hier mit "32" bezeichnete Bohrung, in den von Trennmembran 16 und Membranbett 18 gebildeten Zwischenraum. Üblicherweise ist die Einmündungsbohrung 32 der Zuleitung 28 aus Fertigungsgründen zentrisch im Membranbett 18 angeordnet.

In der Praxis hat sich gezeigt, daß Druckstöße im Prozeßmedium und dabei besonders solche im Überlastbereich bei den erwähnten, herkömmlichen Druckmeßgeräten 10 mit zentrischer Einmündungsbohrungen 32 der Zuleitung 28 im Membranbett 18 zu Problemen führen können. Infolge der dabei schlagartig ausgelenkten Trennmembran 16 kann die Fließgeschwindigkeit der durch die Einmündungsbohrung 32 in die Zuleitung 28 gepreßten Druckmittler-Flüssigkeit 26 derart erhöht werden, daß die Trennmembran 16 auf die Einmündungsbohrung 32 gesogen wird und diese verschließt. Da die trennmembran 16 unter belastung in ihrem zentrum den Punkt ihrer größten Durchbiegung hat, nähert sie sich natürlich mit ihrem Zentrum einer Einmündungsbohrung 32 im Zentrum des Membranbettes 18 schneller als einem Randbereich des Membranbettes 18.

Ein unter "normalen" Druckbelastungen durch die Auslenkung der Trennmembran 16 bewirktes gleichmäßiges Abfließen der Druckmittler-Flüssigkeit 26 in die Zuleitung 28 zur Druckmeßzelle 30 ist nicht mehr gewährleistet. Der Strom der Druckmittler-Flüssigkeit 26 zur Druckmeßzelle 30 reißt ab, und die Druckmeßzelle 30 erhält eine fehlerhafte Information über den tatsächlich an der Trennmembran 16 anstehenden Druck. Ein daraufhin fälschlicherweise vom Druckmeßgerät 10 ermittelter Druckwert, der zur Steuerung des Prozesses herangezogen wird, kann zu einer möglicherweise gefährlichen Fehlsteuerung des Prozesses führen.

Um zu verhindern, daß die Trennmembran 16 bei einem Druckstoß die Einmündungsbohrung 32 der Zuleitung 28 im Membranbett 18 verschließt, ist heute, wie in Fig.2 der beigefügten Zeichnung veranschaulicht ist, bei vielen Druckmittler-Vorrichtungen 12 eine gerade Nut 34 in eine Oberfläche 36 des Membranbettes 18 derart eingearbeitet, daß die zentrisch im Membranbett 18 angeordnete Einmündungsbohrung 32 der Zuleitung 28 in sie mündet. Mit dieser Maßnahme soll sicher gestellt werden, daß die Druckmittler-Flüssigkeit 26 auch bei am Membranbett 18 und an der Einmündungsbohrung 32 anliegender Trennmembran 16 noch in die Zuleitung 28 abfließen kann.

Der Nachteil einer solchen Längsnut 34 in der Oberfläche 36 des Membranbettes 18 ist, daß ihre Herstellung, meistens eine Fräsung, wenigstens einen zusätzlichen Schritt bei der Fertigung der Druckmittler-Vorrichtung 12 erfordert. Ein weiterer Nachteil einer solchen Längsnut 32 ist, daß die an sich runde, rotationssymmetrische Trennmembran 16 durch Anlegen an die Längsnut 34 eine ungleichmäßige Beanspruchung erfährt. Es ist darüberhinaus beobachtet worden, daß die Trennmembran 16 unerwünscht versteift, wenn sie sich, wie im Falle einer Überlast, in die Längsnut 34 einprägt. Der Vollständigkeit halber und zur Verdeutlichung, daß die Trennmembran 16 rotationssymmetrisch ist, ist in Fig. 2 ein mit "38" bezeichneter Bereich für eine kreisringförmige Schweißung dargestellt, mittels derer die Trennmembran 16 am Druckmittler-Grundkörper 14 befestigt ist (siehe dazu auch Fig. 1, wo die Schweißung symbolhaft dargestellt ist).

Eine Aufgabe der Erfindung ist es daher, ein Druckmeßgerät zu schaffen, bei dessen Druckmittler-Vorrichtung gewährleistet ist, daß die durch Auslenkung der Trennmembran in die Zuleitung zur Druckmeßzelle gepreßte Druckmittler-Flüssigkeit auch bei am Membranbett anliegender Trennmembran ohne Unterbrechung abfließen kann, ohne daß das Anlegen der Trennmembran am Membranbett die Elastizität der Trennmembran dauerhaft beeinträchtigt.

Zur Lösung dieser Aufgaben besteht die Erfindung aus einem Druckmeßgerät nach dem Anspruch 1.

Der besondere Vorteil des erfindungsgemäßen Druckmeßgerätes ist, daß durch die exzentrische Anordnung der Einmündung der Zuleitung der Druckmittler-Flüssigkeit im Membranbett die Einmündung räumlich von jenem (zentrische) Bereich der Trennmembran getrennt wird, der unter dem Einfluß des Prozeßdrucks am stärksten ausgelenkt wird und sich dem Membranbett am meisten annähert. Dadurch kann sichergestellt werden, daß sich die Trennmembran beim Anlegen an das Membranbett nicht zuerst auf die Einmündung legt und sie verschließt. Die Einmündung kann sogar in einem Bereich der Oberfläche des Membranbettes vorgesehen werden, der einem solchen Bereich der Trennmembran entspricht, der sich auch bei Überlast nicht an das Membranbett anlegt. Die durch die belastete Trennmembran verdrängte Druckmittler-Flüssigkeit kann so jederzeit ohne Unterbrechung in die Einmündung der Zuleitung abfließen.

Ein anderer Vorteil dieses Druckmeßgerätes ist, daß die an sich schon vorteilhafte Wirkung der exzentrisch angeordneten Einmündung durch die Kombination mit einer unstetig gestalteten Oberfläche des Membranbettes verstärkt wird.

Die in der Oberfläche des Membranbetts vorgesehene kreisringförmige Nut kann besonders einfach hergestellt werden, insbesondere wenn diese in einer im wesentlichen konkaven Grundform des Membranbettes eingebracht wird. Selbst beim Anliegen der Trennmembran am Membranbett und einer bei Überlast möglichen Einprägung einer entsprechenden kreisringförmigen Ausformung in die Trennmembran wird die Elastizität der Trennmembran nicht herabgesetzt.

Ein anderer Vorteil ist, daß sich eine kreisringförmige Nut in die Oberfläche des Membranbetts auf einfache Weise in jenem Bereich des Membranbettes einbringen läßt, in dem bei Belastung die geringsten Radial- und Tangentialspannungen auftreten.

Bei einer vorteilhaften Ausführungsform des erfindungsgemäßen Druckmeßgeräts enthält die Oberfläche des Membranbetts mehrere Nuten, die untereinander verbunden sind, wobei die Zuleitung der Druckmittler-Flüssigkeit in wenigstens eine dieser Nuten einmündet. Diese Ausführungsform eignet sich besonders für Trennmembranen größeren Durchmessers.

Eine vorteilhafte Weiterbildung der Erfindung sieht vor, daß das Druckmeßgerät ein Differenzdruckmeßgerät ist, wobei das Druckmeßgerät mit zwei voneinander getrennten Druckmeßzellen und zwei Druckmittler-Vorrichtungen ist, die entsprechend einer der oben erwähnten Ausführungsformen gestaltet sind.

Eine andere vorteilhafte Weiterbildung der Erfindung sieht vor, daß das Druckmeßgerät ein Differenzdruckmeßgerät ist, wobei das Druckmeßgerät ein Differenzdruck-Meßgerät mit einer Druckmeßzelle und zwei Druckmittler-Vorrichtungen ist.

Nachfolgend wird die Erfindung am Beispiel bevorzugter Ausführungsformen anhand der beigefügten Zeichnung näher erläutert. Dabei zeigen:
- Fig. 3: eine schematische Schittdarstellung eines erfindungsgemäßen Membranbetts einer Druckmittler-Vorrichtung eines Druckgerätes;
- Fig. 4: eine schematische Darstellung eines bevorzugten erfindungsgemäßen Membranbetts einer Druckmittler-Vorrichtung eines Druckgerätes;
- Fig. 5: eine schematische Darstellung eines erfindungsgemäßen Differenzdruckmeßgerätes mit einer Druckmittler-Vorrichtung und mit Membranbetten nach Fig. 4; und
- Fig. 6: eine schematische Darstellung eines anderen erfindungsgemäßen Differenzdruckmeßgerätes mit einer Druckmittler-Vorrichtung und mit Membranbetten nach Fig. 4.

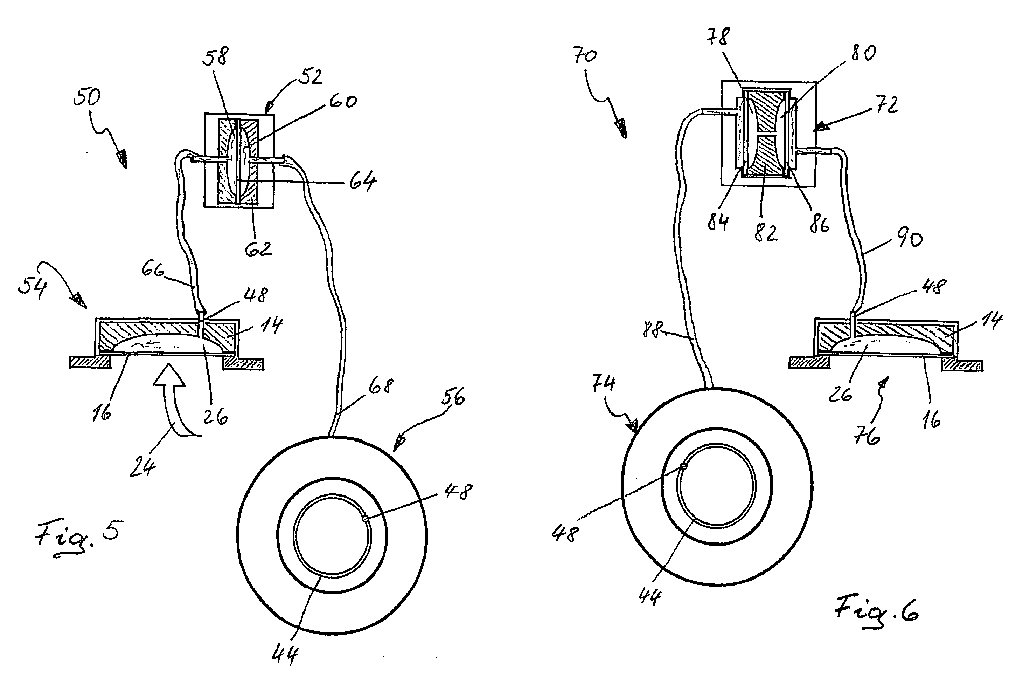

Sofern in den Fig. 3 bis 6 Merkmale und Elemente beschrieben werden, die bereits eingangs im Text zu dem in den Fig. 1 und 2 dargestellten Druckmeßgerät erwähnt wurden oder die diesen in Funktion oder Beschaffenheit gleichkommen, werden die gleichen Bezugszeichen verwendet.

In Fig. 3 ist ein erfindungsgemäßes Membranbett 40 in einer schematischen Schnittdarstellung zu sehen, das eine bevorzugte, im wesentlichen konkave Grundform aufweist mit einer unstetig gestalteten Oberfläche 42, im Gegensatz zur regelmäßigen, stetigen Oberfläche 36 des in Fig. 2 abgebildeten herkömmlichen Membranbetts 18. In die Oberfläche 42 sind eine erste kreisringförmige Nut 44 und eine zweite kreisringförmige Nut 46 eingearbeitet, die vorzugsweise über wenigstens einen hier nicht dargestellten Kanal miteinander verbunden sind. Mittels einer Zuleitung 48, die in die erste kreisringförmige Nut 44 mündet und die die hydraulisch Verbindung mit einer Druckmeßzelle 30 (siehe dazu Fig. 1) herstellt, wird der an der Trennmembran 16 anstehende Druck über die Druckmittler-Flüssigkeit 26 zur Druckmeßzelle 30 übertragen. Wie bereits erwähnt, bietet das in der in Fig. 3 abgebildete erfindungsgemäße Membranbett 40 bei Druckstößen im Prozeßmedium den Vorteil, daß sich die Trennmembran 16 zunächst mit ihrem Zentrum an den zentrischen Bereich des erfindungsgemäßen Membranbettes 40 anlegt. Da hier die Einmündungsbohrung der Zuleitung 48 außerhalb dieses Bereiches des Membranbettes angeordnet ist, bleibt die Zuleitung 48 für die verdrängte Druckmittler-Flüssigkeit 26 offen. Durch die kreisringförmige Nuten 44, 46 in der Oberfläche 42 des Membranbettes 40 wird das Abfließen der Druckmittler-Flüssigkeit 26 aus dem von Trennmembran 40 und Membranbett 40 gebildeten Zwischenraum vereinfacht.

Das abgebildete Membranbett 40 ist, bis auf die Anordnung der Zuleitung 48, die ein Röhrchen oder ein Rohrstutzen sein kann, rotationssymmetrisch, was in Fig. 3 durch eine Mittellinie CL veranschaulicht wird.

Fig. 4 zeigt eine schematische Darstellung eines erfindungsgemäßen Membranbettes 40 (mit im wesentlichen konkaver Grundform, siehe dazu auch die Fig. 5 und 6), das in dieser vorteilhaften Ausführungsform nur die erste kreisringförmige Nut 44 aufweist, in die die Zuleitung 28 mündet. Der Bereich des erfindungsgemäßen Membranbettes 40, in dem die hier nicht dargestellte Trennmembran 16 durch die ringförmige Schweißung 38 befestigt wird, ist hier ebenfalls der Einfachheit halber wieder mit "38" veranschaulicht. Der Vorteil dieser Ausführungsform der Erfindung ist ihre vereinfachte Fertigung. Die kreisringförmige Nut 44 kann auf der gleichen Maschine gefräst werden, die zum Fräsen bzw. Schleifen der Oberfläche 42 des konkaven Membranbettes 40 dient, und zwar ohne daß eine Einspannung des Membranbettes 40 verändert werden müßte. Die positive Wirkung der exzentrischen Zuleitung 28 in Verbindung mit der ersten kreisringförmigen Nut 44 bei Druckstößen stimmt im wesentlichen mit der des erfindungsgemäßen Ausführungsbeispiels der Fig. 3 überein.

Die Fig. 5 und 6 geben in schematisierter Darstellung jeweils ein erfindungsgemäßes Differenzdruck-Meßgerät wieder. Von dem in Fig. 5 abgebildeten, im Folgenden als erstes Differenzdruck-Meßgerät 50 bezeichneten Gerät sind zur Vereinfachung nur eine erste Differenzdruck-Meßzelle 52 und ein erster und zweiter Druckmittler 54 und 56 dargestellt. Die erste Differenzdruck-Meßzelle 52 weist zur Messung zweier Drücke des Prozeses eine erste und eine davon abgetrennte zweite Druckmeßkammer 58 und 60 auf, die bei dem hier dargestellten Ausführungsbeispiel aus einer gemeinsamen Kammer in einem ersten Meßzellen-Grundkörper 62 durch Unterteilung mittels einer Mittenmembran 64 erhalten werden.

Die Mittenmembran kann beispielsweise als Kreismembran oder Ringmembran ausgeführt sein.

Der Aufbau des ersten und der zweiten Druckmittler 54 und 56 ist in der Abbildung der Fig. 5 gleich. Die Druckmittler 54 und 56 sind hier mit einem nicht näher bezeichneten Anschlußflansch abgebildet, der zur Ankoppelung an einen Prozeß dient. Bei der Darstellung des zweiten Druckmittlers 56 ist quasi die Trennmembran 16 entfernt, um den Blick auf das erfindungsgemäße Membranbett 40 (wie in Fig. 4) mit der ersten kreisringförmigen Nut 44 und die darin einmündende Zuleitung 28 freizugeben. Falls unter bestimmten Bedingungen der dargestellte Aufbau der Druckmittler 54 oder 56 abzugewandeln ist, so kann dies von einem Fachmann auf einfache Weise vorgenommen werden.

Die erste Druckmeßkammer 58 ist über die erste Zuleitung 66 hydraulisch mit dem ersten Druckmittler 54 und die zweite Druckmeßkammer 60 ist über die zweite Zuleitung 68 hydraulisch mit dem zweiten Druckmittler 56 verbunden. Ohne Einschränkung des Erfindungsgedankens sind die erste und die zweite Zuleitung 66 und 68 hier zwar durch nicht näher bezeichnete Stutzen an den Meßkammern 58, 60 und an den Druckmittlern (dargestellt am Beispiel des ersten Druckmittlers 54 sowie durch nicht näher bezeichnete Verbindungs-Schläuche oder -Röhrchen veranschaulicht, aber dieser Aufbau ist nicht zwingend für die Realisierung der Erfindung.

In Fig. 6 ist ein weiteres Differenzdruck-Meßgerät nach der Erfindung abgebildet, das im Folgenden als zweites Differenzdruck-Meßgerät 70 bezeichnet ist. Zur Vereinfachung ist davon nur eine zweite Differenzdruck-Meßzelle 72 und ein erster und zweiter Druckmittler 74 und 76 dargestellt. Die zweite Differenzdruck-Meßzelle 72 weist zur Messung zweier Drücke des Prozesses eine dritte und eine vierte Druckmeßkammer 78 und 80 auf, die bei dem hier dargestellten Ausführungsbeispiel, im Gegensatz zur Ausführung in Fig. 5, aus zwei geometrisch getrennten aber miteinander hydraulisch durch einen hier nicht näher bezeichneten Kanal verbundenen Kammern in einem gemeinsamen zweiten Meßzellen-Grundkörper 82 und durch eine dritte und eine vierte Meßzellenmembran 84 und 86 gebildet werden.

Der Aufbau des ersten und der zweiten Druckmittler 74 und 76 ist in der Abbildung der Fig. 6 gleich. Die Druckmittler 74 und 76 sind hier (entsprechen der Abbildung der Fig. 5) mit einem nicht näher bezeichneten Anschlußflansch abgebildet, der zur Ankoppelung an einen Prozeß dient. Bei der Darstellung des dritten Druckmittlers 74 ist quasi die Trennmembran 16 entfernt, um den Blick auf das erfindungsgemäße Membranbett 40 (wie in Fig. 4) mit der ersten kreisringförmigen Nut 44 und die darin einmündende Zuleitung 28 freizugeben. Wie in der Beschreibung zur Fig. 5 erwähnt, kann der in Fig. 6 dargestellte Aufbau der Druckmittler 74 oder 76 auf einfache Weise von einem Fachmann abgewandelt werden, falls dies bestimmte Prozeßbedingungen erfordern.

Die dritte Druckmeßkammer 78 ist über eine dritte Zuleitung 88 hydraulisch mit dem dritten Druckmittler 74 und die vierte Druckmeßkammer 80 ist über die vierte Zuleitung 90 hydraulisch mit dem vierten Druckmittler 76 verbunden. Ohne Einschränkung des Erfindungsgedankens sind die dritte und die vierte Zuleitung 88 und 90 hier zwar durch nicht näher bezeichnete Stutzen an den Meßkammern 78, 80 und an den Druckmittlern (dargestellt am Beispiel des ersten Druckmittlers 74 sowie durch nicht näher bezeichnete Verbindungs-Schläuche oder -Röhrchen veranschaulicht, aber dieser Aufbau ist nicht zwingend für die Realisierung der Erfindung.

Die Funktionsweise der in den Fig. 5 und 6 dargestellten Differenzdruck-Meßgeräte 50 und 70 entspricht im wesentlichen der Funktionsweise der in der Beschreibung zu den Fig. 1 bis 4 erläuterten Absolutdruck-Meßgeräte.

In den Fig. 3 bis 6 sind zwar, ohne Einschränkung der Erfindung, Ausführungsbeispiele der Erfindung mit konkav ausgeformten Membranbetten und mit im wesentliche planen Trennmembranen dargestellt, aber die Erfindung kann auch mit anderen Membranbett-Geometrien oder anders gestalteten Trennmembranen realisiert werden.

## Patentansprüche

1. Druckmessgerät zur Messung eines Prozessdrucks, das
- wenigstens eine Druckmesszelle (52; 72) und
- wenigstens eine Druckmittler-Vorrichtung (54; 74),
-- mit einem Druckmittler-Grundkörper (14),
-- mit einer daran befestigten Trennmembran (16),
-- mit einer die Druckmittler-Vorrichtung (54; 74) füllenden Druckmittler-Flüssigkeit (26) zur Übertragung eines an der Trennmembran (16) anstehenden Prozessdruckes auf die Druckmesszelle (52; 72),
-- mit wenigstens einer Zuleitung (28; 66; 88) der Druckmittler-Flüssigkeit (26) zur Druckmesszelle (52; 72),
-- mit einem im Druckmittler-Grundkörper (14) vorgesehenen und der Trennmembran (16) zugewandten Membranbett (40), an das sich die Trennmembran (16) in einem Überlastfall anlegen kann,
--- mit einer exzentrischen Einmündung der Zuleitung (48; 66; 88) der Druckmittler-Flüssigkeit (26) in einen von der Trennmembran (16) und dem Membranbett (40),
**dadurch gekennzeichnet, dass**
das Membranbett eine der Trennmembran (16) zugewandte, unstetig gestaltete Oberfläche (42) mit wenigstens einer kreisringförmigen Nut (44) aufweist, in welche die Zuleitung (28; 66; 88) der Druckmittler-Flüssigkeit (26) einmündet, so dass auch bei am Membranbett anliegender Trennmembran die Einmündung der Zuleitung nicht verschlossen ist

2. Druckmessgerät nach Anspruch 1, bei dem der Druckmittler-Grundkörper (14) eine konkave, konvexe oder ebene Grundform für das Membranbett (40) aufweist.

3. Druckmessgerät nach Anspruch 1, bei dem die Oberfläche (42) des Membranbetts (40) mehrere Nuten (44, 46) enthält, die untereinander verbunden sind.

4. Druckmessgerät nach einem der vorgehenden Ansprüche, wobei das Druckmessgerät ein Differenzdruck-Messgerät (50) mit einer Druckmesszelle (52) ist mit zwei voneinander durch eine Mittenmembran (64) getrennte Druckmesskammern (58, 60) und zwei Druckmittlem (54, 56) ist.

5. Druckmessgerät nach einem der Ansprüche 1 bis 6, wobei das Druckmessgerät ein Differenzdruck-Messgerät (70) mit einer Druckmesszelle (72) mit zwei miteinander verbundenen Druckmesskammem (78, 80) und zwei Druckmittlem (74, 76) ist.

## Claims

1. A pressure-measuring appliance for measuring a process pressure, which comprises
- at least one pressure-measuring cell (52; 72) and
- at least one pressure-averaging apparatus (54; 74),
-- with a pressure-averaging main body (14),
-- with a separating diaphragm (16) connected thereto,
-- with a pressure-averaging liquid (26) filling the pressure-averaging apparatus (54; 74) in order to transmit a process pressure present at the separating diaphragm (16) to the pressure-measuring cell (52; 72),
-- with at least one supply line (28; 66; 88) of the pressure-averaging liquid (26) to the pressure-measuring cell (52; 72),
-- with a diaphragm bed (40) which is provided in the pressure-averaging main body (14) and which faces the separating diaphragm (16) and against which the separating diaphragm (16) can rest in the event of overloading,
--- with an eccentric opening of the supply line (28; 66; 88) of the pressure-averaging liquid (26) into an interspace formed by the separating diaphragm (16) and the diaphragm bed (40),
**characterized in that**
the diaphragm bed has a surface (42), facing the separating diaphragm (16) and designed so as to be discontinuous, with at least one curved groove (44) into which the supply line (28; 66; 88) of the pressure-averaging liquid (26) opens, so that even when the separating diaphragm rests against the diaphragm bed the opening of the supply line is not closed.

2. A pressure-measuring appliance according to Claim 1, in which the pressure-averaging main body (14) has a concave, convex or flat basic shape for the diaphragm bed (40).

3. A pressure-measuring appliance according to Claim 1, in which the surface (42) of the diaphragm bed (40) contains a plurality of grooves (44, 46) which are interconnected.

4. A pressure-measuring appliance according to one of the preceding Claims, wherein the pressure-measuring appliance is a differential-pressure-measuring appliance (50) with a pressure-measuring cell (52) with two pressure-measuring chambers (58, 60), separated from each other by a central diaphragm (64), and two pressure-averaging means (54, 56).

5. A pressure-measuring appliance according to one of Claims 1 to 6, wherein the pressure-measuring appliance is a differential-pressure-measuring appliance (70) with a pressure-measuring cell (72) with two pressure-measuring chambers (78, 80), connected to each other, and two pressure-averaging means (74, 76).

## Revendications

1. Appareil de mesure de pression pour la mesure d'une pression de procédé, qui comprend :
- au moins une cellule de mesure de pression (52, 72) et
- au moins un dispositif de transmission de pression (54, 74),
-- avec un corps de base de transmetteur de pression (14)
-- avec une membrane de séparation (16) fixée audit corps de base
-- avec un liquide (26) transmetteur de pression remplissant le dispositif de transmission de pression (54, 74) pour la transmission d'une pression de procédé appliquée sur la membrane de séparation (16) à la cellule de mesure de pression (52, 72),
-- avec au moins une admission (28, 66, 88) du liquide transmetteur de pression (26) vers la cellule de mesure de pression (52, 72),
-- avec un lit de membrane (40) prévu dans le corps de base - transmetteur de pression (14) et orienté vers la membrane de séparation (16), sur lequel lit de membrane la membrane de séparation (16) peut être appliquée dans un cas de surcharge,
-- avec une embouchure d'admission (48, 66, 88) excentrée du liquide de transmetteur de pression (26) dans un de la membrane de séparation (16) et le lit de membrane (40),
**caractérisé en ce que**,
le lit de membrane présente une surface (42) réalisée de façon discontinue avec au moins une rainure (44) en forme annulaire orientée vers la membrane de séparation (16), dans laquelle débouche l'admission (28, 66, 88) du liquide transmetteur de pression (26) de manière à ce que l'embouchure de l'admission ne soit pas fermée lorsqu'une membrane de séparation est également appliquée sur le lit de membrane;

2. Appareil de mesure de pression selon la revendication 1, dans lequel le corps de base- transmetteur de pression (14) une forme de base concave, convexe ou plane pour le lit de membrane (40).

3. Appareil de mesure de pression selon la revendication 1, dans lequel la surface (42) du lit de membrane (40) comprend plusieurs rainures (44, 46) qui sont reliées entre elles.

4. Appareil de mesure de pression selon une des revendications précédentes, où l'appareil de mesure de pression est un appareil de mesure à pression différentielle (50) avec une cellule de mesure de pression (52) avec des chambres de mesure de pression (58, 60) séparées l'une de l'autre par une membrane médiane (64) et deux transmetteurs de pression (54, 56).

5. Appareil de mesure de pression selon une des revendications 1 à 6, où l'appareil de mesure de pression est un appareil de mesure à pression différentielle (50) avec une cellule de mesure de pression (72) avec deux chambres de mesure de pression (78, 80) reliées entre elles et deux transmetteurs de pression (74, 76).
